# EUROPEAN PATENT APPLICATION

(11) **EP 4 438 247 A1**
(43) Date of publication of application: **02.10.2024**
(21) Application number: 24166394.7
(22) Date of filing: 26.03.2024
(51) Int. Cl.: B25J 13/08, B25J 19/06

(54) **SENSOR UNIT AND INDUSTRIAL ROBOT EQUIPPED WITH THE SENSOR UNIT**

(30) Priority: 31.03.2023 JP 2023057836
(71) Applicant: DENSO WAVE INCORPORATED, Chita-gun, Aichi-pref. 470-2297 (JP); Mechavision Inc., Taipei City 115 (TW)
(72) Inventor: SAITO, Wataru, Chita-gun, Aichi-pref. 470-2297 (JP)
(74) Representative: Winter, Brandl - Partnerschaft mbB

(57) **Abstract**

A senor unit (50) preferably applied to an industrial robot (10) is provided for detecting contact with objects with higher sensitivity and also reducing a contact force caused when being contacted with objects. In the sensor unit (50), a soft member (53) has an inner surface (53a) and is made of a material which is lower in hardness (softer) than a surface of the arm (22) and formed in a shape that covers a surface of a predetermined portion (41c) of the arm (22). A sensor sheet (57) has detection members (57a) arranged to be opposed to the inner surface (53a) of the soft member (53) to detect pressure applied thereto, and detects contact when the detected pressure exceeds a threshold value. A plurality of protrusions (54) protrude from the inner surface (53a) of the soft member (53) towards the detection members (57a). A support (54A, 58, 57b; 154A, 58, 57b; 56, 58, 57b; 59, 57b; 159; 254A, 58, 57b) supports the soft member (53) such that a predetermined-size gap (G) is formed between the detection members (57a) and the protrusions (54).

## Description

### Background

### [Technical Field]

The present invention relates to a sensor unit that is attached to an industrial robot and detects contact with an object.

### [Related Art]

A wide variety of types of robots have been used in factories and other sites. Among them are industrial robots such as articulated robots, in which multiple links are connected in series via rotatable joints to form a robot arm (i.e., manipulator). In this type of industrial robot, sensing contact with other objects is especially important because the robot arm moves in the operating space. For this reason, robots capable of detecting that a robot arm, e.g., a link thereof, has come into contact with an object (obstacle), such as a person, are known, for example, from Patent Document 1. The industrial robot described in this document has a detection function that detects contact based on abnormal torque generated when it contacts an object. In the case of this industrial robot, when contact is detected, the robot itself stops its movement (so-called protective stop) to protect the object and the robot.

### [Prior Art Reference]

### [Patent Documents]

[Patent Reference 1] JP-A-2005-103674

### [Problems to be solved]

In the detection method described above, the distance from the point of contact with the object to the joint is subjected to processing on a threshold for stop control of the robot. However, in the conventional example, the same value is used for the threshold value to determine whether the torque applied to the robot arm is abnormal (i.e., to determine malfunctioning torque). Therefore, different contact points often cause differences in the accuracy and responsiveness of contact detection. For example, if the contact position with the object is closer to the joint, the detection is less accurate and responsive than when it is farther away. Note that if the threshold is lowered to assume contact closer to the joint, the number of unnecessary protective stops will increase. This may reduce production efficiency.

In contrast, it is possible to adopt a configuration in which the surface of the arm (with multiple links) is covered by a sensor unit with a detection unit that can detect contact with an object. This eliminates the detection accuracy and responsiveness concerns mentioned above. To improve the production efficiency of industrial robots, it is desirable to increase the operating speed of industrial robots.

However, in tasks where industrial robots work with humans, the industrial robots must be controlled to reduce the force applied to humans when they come into contact with humans (hereinafter referred to as "contact force") to below an acceptable value. Therefore, the operating speed of the industrial robot can only be increased to the extent that the contact force does not exceed the allowable value. Here, it is desirable that the sensor unit to be able to reduce contact force and to detect contact with an object with high sensitivity. Such a configuration would make it easier to decelerate the motion of the industrial robot during contact with an object until the contact force exceeds the allowable value. In other words, the operating speed of the industrial robot can be increased during this time, allowing it to decelerate and stop as soon as possible.

### Summary

The present invention was made to solve these problems, and its main purpose is to provide a sensor unit that can reduce contact force and detect contact with an object with high sensitivity.

In order to realize the foregoing object, as one mode of the present invention, there is provided a sensor unit attached to an arm of an industrial robot and configured to detect contact with an object. The sensor unit includes: a soft member having an inner surface, the soft member being made of a material whose hardness is lower (i.e., softer) than that of a surface of the arm and formed in a shape that covers a surface of a predetermined portion of the arm; a sensor sheet, which is formed into a sheet, having a detection member arranged to be opposed to the inner surface of the soft member to detect pressure applied thereto, and detecting contact when the pressure detected by the detection member exceeds a threshold value; a plurality of protrusions protruding from the inner surface of the soft member towards the detection member; and a support supporting the soft member such that a predetermined-size gap is formed between the detection member and the plurality of protrusions.

Hence, because of a combination of the forgoing elements, the sensor unit is able to detect contact caused between the predetermined portion of its arm and objects by the sensor unit whose detecting part is attached to the predetermined portion, such as a joint of the arm.

In detail, the sensor unit is equipped with the soft member serving as a sensor. The soft member is made of a material which is lower in hardness (i.e., softer) than a material composing the surface of the arm and is shaped to cover a predetermined portion which is intended to be detected in the arm. Hence, by covering such a predetermined portion with the soft member, when the predetermined portion of the arm comes into contact with an object, the soft member can deform and absorb the impact. Therefore, the force applied to the person when the industrial robot comes into contact with the person (hereinafter referred to as "contact force") can be reduced compared to the case where such predetermined portion directly contacts the person.

The sensor sheet has a detection member that is positioned to be opposed to the inner surface of the soft member for pressure detection. The contact is detected when the pressure detected by the detection member exceeds a threshold value. In other words, the sensor sheet is to detect contact with an object when the pressure detected by the detection member exceeds a threshold value. Based on this detection, the arm of the industrial robot can be decelerated in its motion speed. The sensor sheet does not detect contact with an object if the pressure detected by the detection member does not exceed the threshold value, thus avoiding erroneous motion speed reduction.

Moreover, a plurality of protrusions protrude from the inner surface of the soft member towards the detection member. The support supports the soft member such that a predetermined-size gap is formed between the detection member and the plurality of protrusions. Thus, if an object is not in contact with the soft member, the soft member can be supported without contact with the object, resulting in that no detection due to the contact.

On the other hand, when an object contacts the soft member, the contact area between the tips of the protrusions and the detection member is smaller than the contact area between the object and the soft member. Thus, a higher pressure can be applied from the tip of the protrusions to the detection member than the pressure applied from the object to the soft member when the object contacts the soft member. This ensures that the pressure detected by the detection member exceeds the threshold value before the contact force increases and the contact with the object can be detected with high sensitivity.

If the respective protrusions are thin entirely from their tops to bottoms, the protrusions may buckle or deform when the force is transmitted by the protrusion from the soft member to the detection member. If this buckling or deformation is caused, the pressure applied from the tips of the protrusions to the detection member may decrease and the pressure detected by the detection member may no longer exceed the threshold value, resulting in failure in the pressure detection. In contrast, if the respective protrusions are thick entirely from their tops to bottoms, the strength of the protrusions may become too high and the soft member may deform successfully when an object contacts the soft member, reducing its impact absorbing effect.

The foregoing drawbacks can be avoided by employing the plurality of protrusions which are thinner as the protrusions approach from the inner surface of the soft member to the detection member. According to this configuration, it is possible to suppress the buckling of the protrusions when the protrusions transmit the force from the soft member to the detection member, while suppressing the strength of the protrusions from becoming too high. Therefore, when an object contacts the soft member, the soft member deforms to absorb the impact, and this effect will not be lowered due to the excessive protrusions' strength and the buckling, so that the contact with the object can be detected with high sensitivity.

In a preferred embodiment, in the foregoing configuration, the detection member is provided as a plurality of detection members arranged two-dimensionally and discreetly in the sensor such there are remaining portions (serving as non-detection members) other than the detection members in the sensor sheet, and the plurality of protrusions include a plurality of protrusions which are opposed, protrusion by progression, to the remaining portions with a spacer whose thickness is set to correspond to a predetermined-size gap in a direction along a height of each of the protrusions. That is, the spacer is located at a position at which each of the non-detecting members is located, whereby such a combination of the non-detection member and the spacer aligned in a length direction of each protrusion can be used as part of elements composing the support for the sheet member.

In the foregoing configuration, it is still preferred that the soft member and the plurality of protrusions are made of the same material and formed into a unified member. By employing such a configuration, the soft member and the plurality of protrusions can be molded using the same material, which facilitates the manufacture of the soft member and the plurality of protrusions.

As another mode of the present invention, there is provided a sensor unit attached to an arm of an industrial robot and configured to detect contact with an object. The sensor unit according this mode includes:
a soft member having an inner surface, the soft member being made of a material which is lower in hardness (i.e., softer) than a surface of the arm and formed in a shape that covers a surface of a predetermined portion of the arm;
a sensor sheet, which is formed into a sheet, having a detection member arranged to be opposed to the inner surface of the soft member to detect pressure applied thereto, and detecting contact when the pressure detected by the detection member exceeds a threshold value;
a force concentrator adapted to concentrate a force applied to the soft member and transmit the concentrated force in a direction toward the detection member; and
a support adapted to support the soft member such that there is left a predetermined-size gap between the detection member and the force concentrator.

In this configuration, the force concentrator concentrates a force applied to the soft member and transmits the concentrated force towards the detection member. Meanwhile, the support supports the soft member such that a predetermined-size gap is formed between the detection member and the force concentrator in the length direction of each of the protrusions. Thus, if an object does not come in contact with the soft member, the soft member can be supported without contact with the object being detected by the detection member. In contrast, if an object contacts the soft member and thus, the soft member is deformed, a force applied to the soft member is concentrated by the force concentrator, and then transmitted to the detection member. For this reason, a pressure higher than the pressure applied from the object to the soft member can be applied to the detection member from the force concentrator. As a result, the pressure detected by the detection member exceeds the threshold value before the contact force increases and becomes too high, whereby the contact with the object can be detected with high sensitivity.

As another mode of the present invention, there is provided an industrial robot including:
an arm;
the sensor unit according to any of the foregoing structures, which is applied to the arm, and
means for reducing a motion speed of the arm when the sensor unit detects the contact.

Therefore, the contact force can be reduced when the arm of the industrial robot comes into contact with a person, and the arm motion speed can be decelerated (e.g. stopped) by detecting contact with a person with high sensitivity. It is thus easier to decelerate the arm motion speed before the contact force exceeds an acceptable value in a case where the arm, specifically, the arm predetermined portion at which the sensor unit is installed, comes into contact with a person. This means that, in the normal operations of the industrial robot, the operating speed of the arm can be increased as much as possible within an allowable range, because, in the present invention, the arm motion speed can be reduced as early as possible before the forced stop of the robot which will be commanded due to an even that the contact force exceeds the acceptable value.

### Brief Description of the Drawings

In the accompanying drawings:
Fig. 1 is a perspective view showing a robot serving as an industrial robot according to an embodiment;
Fig. 2 is a side view showing a side of the robot;
Fig. 3 is a partial perspective view showing a state in which a sensor unit is removed from a robot body of the robot;
Fig. 4 is a side view showing a side of the sensor unit;
Fig. 5 is a partially sectioned perspective view of the sensor unit;
Fig. 6 is a side view showing s positional relationship between a plurality of protrusions and a sensor sheet, both of which are incorporated in the sensor unit;
Fig. 7 is a graph comparatively showing contact forces occurring in the present embodiment and in comparative examples, in both of which robot arm speeds are set to equal to each other;
Fig. 8 is a side view showing a side of an internal structure of a sensor unit according to a modification;
Fig. 9 is a side view showing a side of an internal structure of a sensor unit according to another modification;
Fig. 10 is a side view showing a side of an internal structure of a sensor unit according to another modification;
Fig. 11 is a side view showing a side of an internal structure of a sensor unit according to another modification;
Fig. 12 is a side view showing a side of an internal structure of a sensor unit according to another modification; and
Fig. 13 is a side view showing a side of an internal structure of a sensor unit according to another modification.

### Detailed Description of the Preferred Embodiments

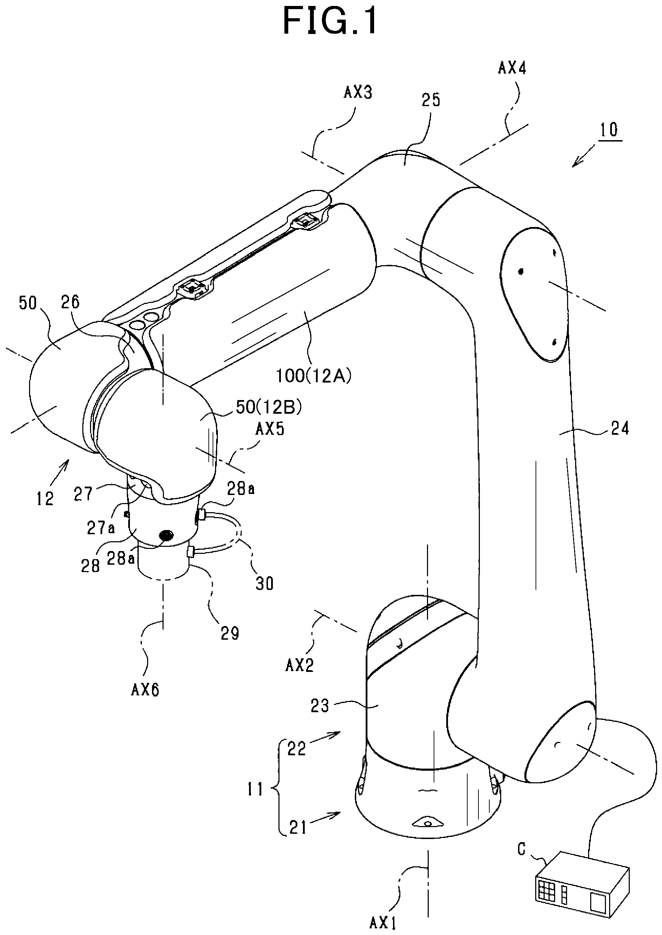

The embodiments of the sensor unit and an industrial robot equipped with the sensor unit (hereinafter referred to simply as "robot") of the present disclosure are described below with reference to Figs. 1 to 7. One example of this industrial robot is a robot that can cooperate with humans in a machine assembly plant.

As shown in Fig. 1, a robot 10 has a vertically articulated robot body 11. The main body of the robot 11 has a base 21 that is fixed to the floor or other surface, and one arm-like arm 22 that has multiple joints. The arm 22, also called a manipulator, consists of multiple links 14-19 connected in series and rotatable via joints. Therefore, the arm 22 can adopt various postures, including a linear posture, in order to perform a given task with multiple arms connected in series (in a line) as a whole.

Although some of the figures are omitted in Figure 1, a group of sensor units 12 capable of detecting contact with a person or other object is attached to the periphery of each link 14 (to 19) of the arm 22.

The arm 22 has, as the above plurality of links, a shoulder part 23 supported by a base 21, a lower arm portion 24 supported by the shoulder 23, a first upper arm portion 25 supported by the lower arm portion 24, a second upper arm portion 26 supported by the first upper arm portion 25, a wrist part 27 supported by the second upper arm portion 26, and a flange 28 supported by the wrist part 27. The material of the component presenting the surface of arm 22 is, for example, an aluminum alloy (metal). An end effector 29 is attached to the flange 28. The robot 10 can be replaced with several types of end effectors depending on the work to be performed. The material of the component presenting the surface of the arm 22 also can be hard plastic (hard resin) or other material.

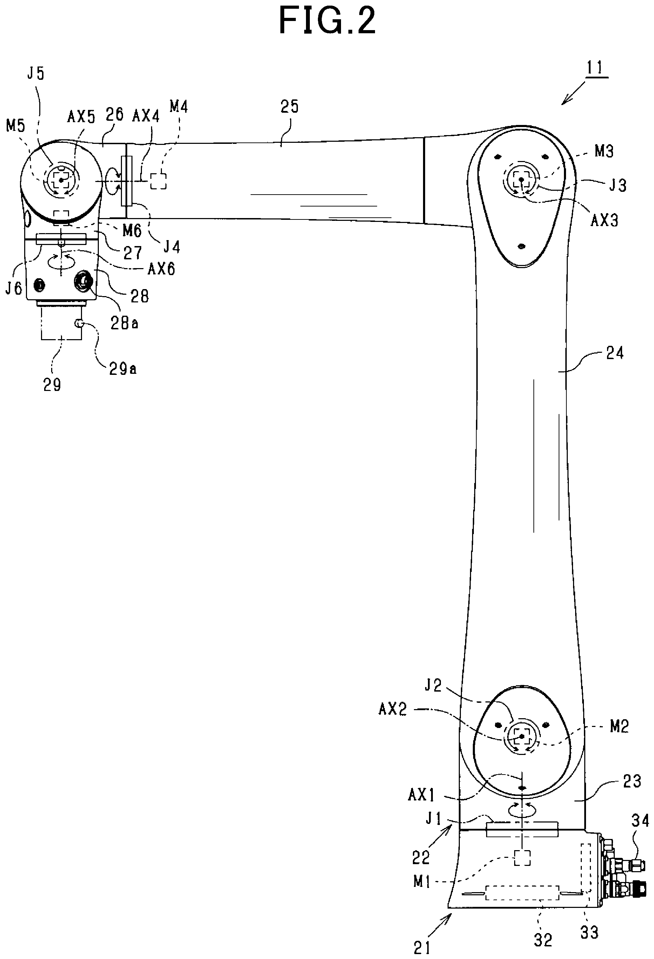

As shown in Fig. 2, the base 21 and the shoulder 23 have a first joint J1 connecting them. As a result, the shoulder 23 can rotate horizontally around a connecting axis AX1 of the first joint J1. The shoulder 23 and the lower arm portion 24 have a second joint J2 connecting them. Therefore, the lower arm portion 24 can rotate in the vertical direction around a connecting axis AX2 of the second joint J2. A third joint J3 is formed between the lower arm portion 24 and the first upper arm portion 25, connecting the lower arm portion 24 and the first upper arm portion 25. Therefore, the first upper arm portion 25 can be rotated in the vertical direction around a connecting axis AX3 of the third joint J3. A fourth joint J4 is formed between the first and second upper arm portions 25 and 26, connecting those first and second upper arm portions 25 and 26. Therefore, the second upper arm portion 26 can rotate in the twisting direction around a connecting axis AX4 of the fourth joint J4. A fifth joint J5 is formed between the second upper arm portion 26 and the wrist part 27, which connects those two parts. Therefore, the wrist part 27 can rotate in the vertical direction around a connecting axis AX5 of the fifth joint J5. A sixth joint J6 connecting the wrist part 27 and the flange 28 is formed between those two parts. Therefore, the flange 28 can rotate in the twisting direction around a connecting axis AX6 of the sixth joint J6.

Each of the joints J1 to J6 is equipped with a motor M1 to M6 (specifically, a servo motor) as a drive unit to rotate each joint J1 (to J6). The motors M1 to M6 are connected to a motion controller 33 via a servo amplifier 32. The motion controller 33 can be connected to an superior controller C via the external input/output unit 34 on the base 21. The motion controller 33 controls the drive of motors M1 to M6 based on commands from the superior controller C.

Specifically, when the motion controller 33 receives a command from the superior controller C, it reads the operating program corresponding to the command from the program storage unit and executes the read operating program. By executing this operating program, the motion target position is identified. Furthermore, a target trajectory that smoothly connects the identified motion target position and the current position of the arm 22 is generated, and interpolated positions, which are subdivisions of the target trajectory, are sequentially transmitted to the servo amplifier 32.

The servo amplifier 32 is connected to the encoders provided for each of the motors M1 to M6. Based on the values output from these encoders, the rotational position of motors M1 to M6 (i.e., the posture of arm 22) is detected. The servo amplifier 32 calculates the deviation between the detected rotational position and the interpolated position contained in the command received from the motion controller 33. The servo amplifier also calculates the respective target torque and target rotation speed of the motors M1 to M6 based on the respective deviations. Furthermore, the servo amplifier determines the power (current, voltage, pulse) to be supplied to each of the motors M1 to M6 based on the calculated target torque and target rotation speed, and supplies power to each motor M1 to M6. These servo amplifier 32, motion controller 33, and superior controller C constitute the control system of robot 10.

As shown in Figure 1, the periphery of the flange 28 has a connection terminal 28a that can be connected with a cable 30 extending from the end-effector 29. The robot body 11 contains (built-in) wiring that connects the connection terminals 28a to the external input/output terminals 34 of the base 21, which is not shown in the figure. This wiring is connected to the motion controller 33 and the external input/output terminals 34 (see Fig. 2). By connecting the cable 30 extending from the end effector 29 to the connection terminals 28a, the end effector 29 can be connected to the motion controller 33 and/or the superior controller C.

The control system shown in this embodiment has a detection function that detects contact based on the torque that takes an abnormal value that occurs when the arm 22 comes into contact with an object such as a person. If contact is detected, the operation of the robot body 11 is stopped (protective stop). This protects the object and the robot body 11. However, in the case of this detection method, the same threshold value is used to determine whether the torque takes an abnormal value or not, regardless of the distance from the point of contact with the object to the joint. Therefore, there are often differences in the accuracy and responsiveness of contact detection depending on where the contact point is on the arm 22. For example, the accuracy and responsiveness of such detection is reduced when comparing contact at a position closer to the joint with contact at a position farther away from the joint.

It is noted that if the threshold value is lowered to assume contact at a position close to the joint, production efficiency may be expected to decrease due to an increase in the number of unnecessary protective stops. In this form of the robot 10, the arm 22 is covered by the sensor unit group 12, which detects object contact. A configuration is adopted in which the robot 10 is stopped (protective stop) when contact is detected by the sensor unit group 12. In other words, the system is configured to perform a protective stop (i.e., deceleration in speed of the motions of the arm) not only when it is determined that an abnormal torque value has occurred, instead of detecting a normal torque value which is provided when the arm 22 is operating normally, but also when contact is directly detected by sensor unit group 12.

Here, the sensor unit group 12 shown in Fig. 1 is classified into two major groups according to the shape of the links and other factors. Specifically, it is classified into two sensor unit groups: a sensor unit group 12A, which is applied to the straight shape part of the link (hereinafter referred to as "straight part"), and a sensor unit group 12B, which is applied to the bent shape part of the link (hereinafter referred to as "bent part"). In this embodiment, although some sensor units are omitted from the figure, the sensor unit group 12A for the straight part is applied to the lower arm portion 24 and the first upper arm portion 25, while the sensor unit group 12B for the bent part is applied to the second upper arm portion 26 and the wrist part 27.

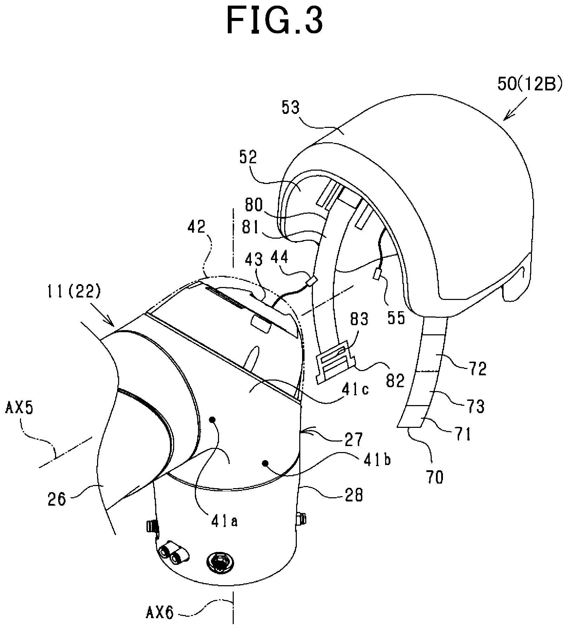

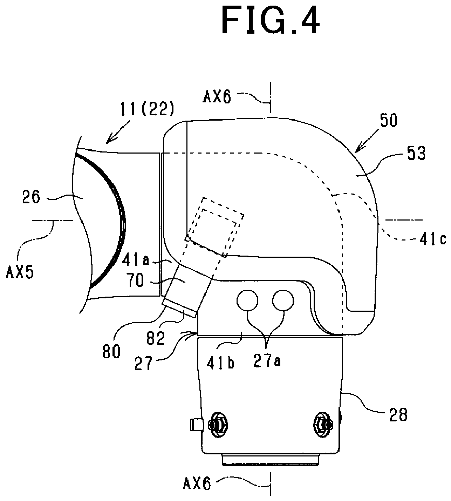

Referring to Figs. 3 and 4 below, an example of a sensor unit 50 for the wrist part 27 as the sensor unit group 12B applied to the bent part is described.

As shown in Fig. 3, the wrist part 27 is bent substantially at a right angle at its midpoint, forming an L-shape as a whole. In other words, the wrist part 27 consists of a linear part 41a connected to the second upper arm portion 26 and extending in the same direction as the connecting axis AX5, a linear part 41b connected to the flange 28 and extending in the same direction as the connecting axis AX6, and a bent part 41c connecting these linear parts 41a and 41b.

The sensor unit 50 has a frame 52 and a soft pad 53 formed in a shape that can cover this bent part 41c (serving as a predetermined part) from its outside, as shown in Figs. 3 to 5. More particularly, the frame 52 and the soft pad 53 are positioned to face the outer surface relative to the bending direction in the bent part 41c and the linear parts 41a, 41b, and the side of wrist part 27 (see Fig. 4). As shown in Fig. 4, there are operation buttons 27a on the side of the wrist part 27 that is operated by the user for direct teaching, etc. The frame 52 and soft pad 53 have a shape that covers the sides of the wrist part 27 but has a portion which is removed so that the frame 52 and soft pad 53 do not cover the operation buttons 27.

The frame 52 is formed of hard resin (e.g., polycarbonate), as an example, and is in contact with the outer surface of the wrist part 27. The soft pad 53 (soft member) is formed of a soft resin (e.g., silicone rubber) as an example, and covers the frame 52 from its outside. The soft resin is a softer material than the material (aluminum alloy) that forms the surface of the arm 22 of robot body 11, and is deformable when in contact with an object.

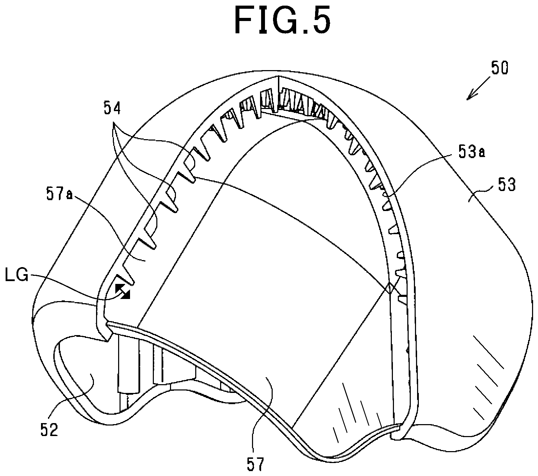

Between the frame 52 and the soft pad 53, a sensor sheet 57 (Fig. 5, see below), which has a certain thickness and is formed as a sheet, is housed. When an object such as a person hits the soft pad 53, the soft pad 53 is deformed, and the sensor sheet 57 is pressed by the deformed soft pad 53 (protrusion 54 described below). This causes the sensor sheet 57 to output a signal indicating contact with the object.

As shown in Fig. 5, the sensor sheet 57 is curved along the outer surface of arm bent part 41c, and becomes a sheet-like material when it is expanded to a flat surface.

As can be seen in Fig. 3, the bent part 41c of the wrist part 27 has a concave portion on the outer side of the part in the direction of bending. This recess is formed as a housing unit 43 that accommodates a connector 44 connected to the robot body 11. This housing unit 43 is covered by a removable cover 42. When the sensor unit 50 is attached to the arm 22 of the robot body 11, the connector 44 is connected to a connector 55 connected to the sensor unit 50. This transmits the signal indicating the contact described above to the robot body 11.

Next, the mounting structure of the sensor unit 50 is described. As shown in Fig. 3, the frame 52 is provided with clasps 70, 80 for attaching the frame 52 to the wrist part 27. The clasp 70 is configured as a long hook and loop fastener with one end secured to the frame 52. One side of this hook and loop fastener has a hook 71 and a loop 72 that joins the hook 71. The hook 71 and the loop 72 are located across the blank 73 in the longitudinal direction of the clasp 70. The blank 73 is located between the hook 71 and the loop 72. Neither the hook nor the loop is formed in the blank 73. The clasp 80 consists of a long belt 81, one end of which is fixed to the frame 52, and a connecting plate 82 fixed to the other end (tip) of the belt 81. The connecting plate 82 has an opening 83. The clasp 70 inserted into the opening 83 is folded over to join the hook 71 to the loop 72, so that the clasps 70, 80 are joined as a series.

Next, the internal structure of the sensor unit 50 is described with reference to Fig. 5. In Fig. 5, the clasps 70 and 80 are omitted from being drawn.

Between the frame 52 and the soft pad 53 is the sensor sheet 57 in sheet form. The sensor sheet 57 has a curved shape that follows the curved shape of the frame 52 and soft pad 53 and covers the outer surface (bent outer surface) of the frame 52. The sensor sheet 57 has a detection member 57a that detects pressure. The detection member 57a (sensor sheet 57) is opposite an inner surface 53a (bent inside) of the soft pad 53. The detection member 57a contains a pressure sensor, which detects pressure applied from the inner surface 53a side of the soft pad 53. The sensor sheet 57 outputs a signal indicating contact with a person or object to the robot body 11 when the pressure detected by the detection member 57a exceeds a predetermined threshold value (i.e., such contact is detected). That is, the sensor sheet 57 outputs a signal indicating contact with the robot body 11 when the pressure detected by the detection member 57a exceeds the predetermined threshold value, but does not output a signal indicating contact with the robot body 11 when the pressure detected by the detection member 57a does not exceed the threshold value.

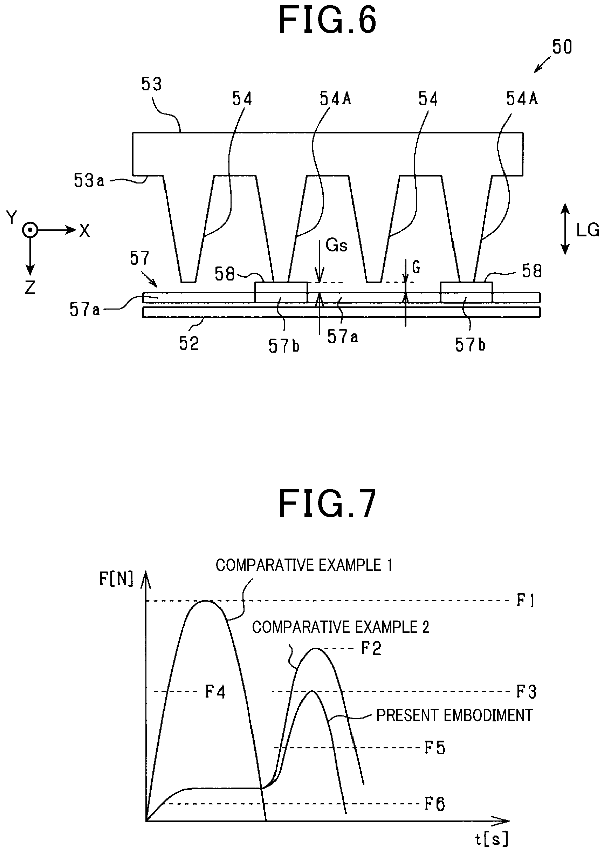

On the inner surface 53a of the soft pad 53, as shown in Fig. 6, a plurality of protrusions 54 are formed facing inward, i.e., protruding like a sword mine along the direction LG orthogonal to the inner surface 53a. This direction LG corresponds to the longitudinal direction of the protrusion 54. The plurality of protrusions 54 are evenly (approximately evenly) distributed on the inner surface 53a of the soft pad 53. In other words, when the soft pad 53 shown in Fig. 6 is expanded in two dimensions, the plurality of protrusions 54 are discretely and fixedly arranged in two dimensions on the face of the soft pad 53.

If the above projection length direction LG is assigned to the Z axis direction, the Cartesian coordinates of the XYZ axis can be virtually set up, as shown in Fig. 6, where the plane along soft pad 53, which can be developed into a virtual plate-like member, is assigned to the XY plane.

The soft pad 53 and the plurality of protrusions 54 are molded (e.g., injection molded) in a mold or similar device using the same soft resin (same material). In other words, the soft pad 53 and the plurality of protrusions 54 are formed in one piece by the same soft resin. A plurality of protrusions 54 protrude from the inner surface 53a of the soft pad 53 toward the detection member 57a. The plurality of protrusions 54 are formed in the shape of a so-called tapered square prism that tapers as it advances to the tip, the free end. That is, the plurality of protrusions 54 are thinner as they approach the inner surface 53a of the soft pad 53 to the detection member 57a. The plurality of protrusions 54 each have the same (abbreviated) shape, and their length and thickness are also equal (abbreviated) to each other.

The multiple protrusions 54 (which function as force concentrators) function to concentrate the force applied to the soft pad 53 and transfer it in the direction of the detection member 57a. In other words, the total area of the tips of the plurality of protrusions 54 present in the area is smaller than the area of the area where force is applied to the soft pad 53. Thus, the force applied to the soft pad 53 is concentrated on the tips of those multiple protrusions 54. This concentrated force is transmitted to the detection member 57a. As a result, the pressure transmitted from the tip of the protrusion 54 to the detection member 57a will be higher than the pressure based on the force applied to a portion of the soft pad 53.

The structure in which each of the protrusions 54 is thin and tapered may cause them to buckle when transmitting force from the soft pad 53 to the detection member 57a. If this buckling occurs, the pressure applied from the tip of the protrusion 54 to the detection member 57a may decrease and the pressure detected by the detection member 57a may no longer exceed the threshold value. On the other hand, if multiple protrusions 54 are thick, the strength of the protrusions 54 may become too high. In this case, when an object contacts the soft pad 53, the soft pad 53 may deform and become less effective in absorbing the impact.

As shown in Fig. 6, the sensor sheet 57 includes a non-detection member 57b, which does not detect pressure. The non-detection member 57b (the part other than the detection member 57a) can be the same configuration as the detection member 57a with the function of nullifying the detected value of pressure, or it can be a wiring part that does not contain a pressure sensor. Furthermore, it may be formed as a portion without pressure sensors or wiring.

In addition, the plurality of protrusions 54 includes a plurality of protrusions 54A (hereinafter also referred to simply as partial protrusions), some of which form part of the protrusions 54A, with their tips tangential to a spacer 58. In other words, as shown in Fig. 6, there is the space 58 between the non-detection member 57b and some of the above protrusions 54A, for each pair of them. The spacer 58 is a sheet (plate) member formed of resin, such as PET (polyethylene terephthalate), and has a shape that matches the area presented by the non-detection member 57b in a plan view.

Some of the above protrusions 54A are collectively included in the plurality of protrusions 54, if necessary.

As shown in Fig. 6, a predetermined-size gap G is formed between the detection member 57a and the plurality of protrusions 54, corresponding to the thickness Gs of the spacer 58 in the absence of external forces. That is, the protrusion 54A and the spacer 58 (support) support the soft pad 53 so that the predetermined-size gap G is formed between the detection member 57A and multiple protrusions 54 (except some protrusions 54A described above). In other words, the thickness Gs of the spacer 58 is the thickness corresponding to the predetermined-size gap G.

The predetermined-size gap G can be set to the smallest allowable gap size, for example, where the plurality of protrusions 54 (except for some protrusions 54A described above) do not contact the detachment member 57a (the detection pressure from the detection member 57A does not exceed the threshold value) even if the soft pad 53 and plurality of protrusions 54 are deformed by their own weight. The predetermined-size gap G may be set to the minimum allowable gap size where the plurality of protrusions 54 do not contact the detection member 57a even if inertia acts on the soft pad 53 and the plurality of protrusions 54 when the arm 22 of the robot body 11 is operated. As long as there is no contact, the detected pressure from the detection member 57A does not exceed a predetermined threshold.

The size of the predetermined-size gap G may be set by further considering the manufacturing variation of the soft pad 53 and multiple protrusions 54.

Fig. 7 shows the change in a contact force F at the same operating speed of the robot 10 for comparative examples 1 and 2 and this embodiment. Here is an example of the robot 10 contacting a person at time t = 0[s].

The comparative example 1 shows the change in contact force F when the bent part 41c of the arm 22 is in direct contact with a person on a robot to which sensor unit 50 is not attached. Because the surface material of arm 22 is formed of aluminum alloy and is hard, the contact force F increases rapidly from t = 0 [s]. When the contact force F reaches F4, the protective stop based on contact detection by abnormal torque is activated. The contact force F then peaks at contact force F1 before decreasing.

The comparison example 2 relates to a robot with a sensor unit installed that is not provided with a plurality of protrusion 54 of this type. The figure shows the change in contact force F when the sensor unit attached to the bent part 41c of arm 22 makes contact with a person in this robot. In this comparison example 2, the soft pad 53 of the sensor unit covers the surface of arm 22, so the contact force F is low while the soft pad 53 is deformed. Then, when the soft pad 53 finishes deforming, the contact force F increases rapidly. Furthermore, a protective stop based on contact detection by the sensor unit is activated when the contact force F reaches F5. The sensor unit detects contact at a contact force F5 lower than a contact force F4. The sensor unit detects contact at the contact force F5 lower than the contact force F4. The contact force F then peaks at a contact force F2, which is lower than a contact force F1, and then decreases.

In contrast, in the case of the structure in which this form is implemented, provided is the robot 10 with the sensor unit 50 with which the plurality of protrusions 54 are also arranged. The curve shown in Fig. 7 in "PRESENT EMBODIMENT" shows the change in contact force F when the sensor unit 50 attached to the bent part 41c of arm 22 comes into contact with a person. Since the soft pad 53 of sensor unit 50 covers the surface of arm 22, the contact force F is low while the soft pad 53 is deformed. In this case, the protective stop based on contact detection by the sensor unit 50 is activated when the protrusion 54 contacts the detection member 57a in the process of deforming the soft pad 53 and the contact force F becomes a contact force F6. Here, because of the higher pressure applied from the tip of the protrusion 54 to the detection member 57a, the sensor unit 50 detects contact with the contact force F6 lower than the contact force F5. The contact force F then peaks at a contact force F3, which is lower than the contact force F2, before decreasing. Therefore, in this form, the operating speed of arm 22 can be further increased to the extent that the contact force F does not exceed the allowable value.

The embodiment detailed above has the following advantages.

The soft pad 53 is made of a soft resin that is softer (less hard) than the aluminum alloy that forms the surface of the arm 22 and is shaped to cover the bent part 41c of the arm 22. Therefore, by covering the bent part 41c of arm 22 with the soft pad 53, when the bent part 41c of arm 22 contacts an object, the soft pad 53 can deform and absorb the impact. Therefore, the force (contact force) applied to a person when the robot 10 contacts a person can be reduced more reliably than in comparative example 1, where the bent part 41c of arm 22 directly contacts the person.

The plurality of protrusions 54 protrude from the inner surface 53a of the soft pad 53 toward the detection member 57a. In addition, the protrusion 54A and the spacer 58 (support) support the soft pad 53 so that the predetermined-size gap G is formed between the detection member 57A and the multiple protrusions 54. Therefore, if an object is not in contact with the soft pad 53, the soft pad 53 can be supported without contact with the object being detected by the detection member 57a of the sensor sheet 57. On the other hand, if an object contacts the soft pad 53, the tip of the protrusion 54 and the detection member 57a contact each other, but the contact area is smaller than the contact area between the object and the soft pad 53. Thus, a higher pressure than that applied from the object to the soft pad 53 can be applied to the detection member 57a from the tip of the protrusion 54. The pressure detected by the detection member 57a before the contact force with the object increases exceeds the threshold value. Therefore, contact with the object can be detected with high sensitivity.

The plurality of protrusions 54 are thinner as they approach the inner surface 53a of the soft pad 53 to the detection member 57a. This configuration prevents the protrusion 54 from becoming too strong. At the same time, the buckling of the protrusion 54 due to the force transmitted through the protrusion 54 from the soft pad 53 to the detection member 57a can be suppressed. Therefore, when an object contacts the soft pad 53, the soft pad 53 is deformed and the shock absorbing effect is reduced. It can also detect contact with objects with high sensitivity.

The spacer 58 with a thickness corresponding to the predetermined-size gap G is provided between a point other than detection member 57A (non-detection member 57b) in the sensor sheet 57 and some protrusions 54A of the plurality of protrusions 54. According to this configuration, the spacer 58 can be provided on the non-detection member 57b, and some of the protrusions 54A described above can be used as part of the member comprising the support of the soft pad 53.

The soft pad 53 and the plurality of protrusions 54 are formed in one piece using the same soft resin. The manufacturing of the soft pad 53 and multiple protrusions 54 is facilitated.

The plurality of protrusions 54 (which function as force concentrators) concentrate the force applied to the soft pad 53 and transmit it toward the detection member 57a. Some protrusions 54A and the spacer 58 support the soft pad 53 so that the predetermined-size gap G is formed between the detection member 57a and the multiple protrusions 54. Therefore, if an object is not in contact with the soft pad 53, the soft pad 53 can be supported without contact with the object being detected by the detection member 57a of the sensor sheet 57. On the other hand, if an object contacts the soft pad 53 and deforms the soft pad 53, the force applied to the soft pad 53 is concentrated by the plurality of protrusions 54 and transmitted to the detection member 57a. Thus, a higher pressure can be applied from the protrusion 54 to the detection member 57a than the pressure applied from the object to the soft pad 53. This makes the contact force between the object and the soft pad 53 increases, the pressure detected by the detection member 57a exceeds the threshold value. Contact with objects can be detected with high sensitivity.

The robot 10 has the sensor unit 50 attached to the arm 22. When the sensor sheet 57 of sensor unit 50 detects contact with an object, etc., the arm 22 is brought to a protective stop. According to such a configuration, when the arm 22 of robot 10 comes into contact with a person, the contact force can be reduced and the contact can be detected with high sensitivity to bring the arm 22 to a protective stop. Therefore, it is easier to decelerate the arm 22 during contact with a person until the contact force exceeds an acceptable value, increasing the speed of operation of arm 22 of robot 10.

The above embodiment and its modifications may be implemented with the following modifications. The same parts as in the embodiment will be omitted from the explanation with the same symbols.

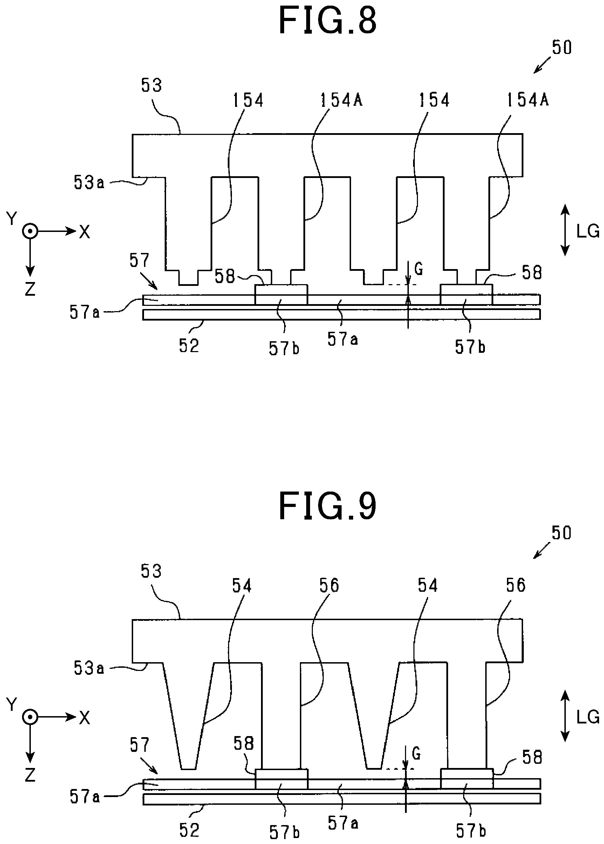

Instead of the protrusions 54, which are formed in the shape of a tapered square prism, protrusions 154 can also be employed, which is a square cylinder in shape, with only the tip tapering to a step, as shown in Fig. 8. Such a configuration also allows higher pressure than that applied from the object to the soft pad 53 to be applied from the tip of the protrusion 154 to the detection member 57a. The soft pad 53 is supported by a plurality of protrusions 154A (hereinafter referred to simply as the protrusion forming part of the plurality of protrusions 154) and the spacer 58 (acting as support), which form part of the plurality of protrusions 154.

The protrusions 54, 54A, 154, 154A can be changed from a square column shape to a cylinder shape. In the case of circular protrusions, the tip of each of these protrusions may be gradually or stepwise tapered compared to the thickness at the base of the protrusions.

As shown in Figure 9, the soft pad 53 can also be supported by a deformed protrusion 56 (which functions as a protrusion) and the spacer 58 (support) with a different shape than a detection protrusion 54. The length that the deformed protrusions 56 protrude from the inner surface 53a of the soft pad 53 is equal to (or approximately equal to) the length that the detection protrusions 54 protrude from its inner surface 53a. In a plan view, i.e., with a line of sight along the lengthwise direction LG of the protrusions 54, 56, the area occupied by the deformed protrusion 56 should fall within the spacer 58. The cross-sectional and overview shape of the deformed protrusion 56 is arbitrary. The detection protrusion 54 can be formed from a harder material (different material) than the soft pad 53 and the irregularly shaped the protrusion 56. In that case, even higher pressure can be applied from the tip of the protrusion 54 to the detection member 57a.

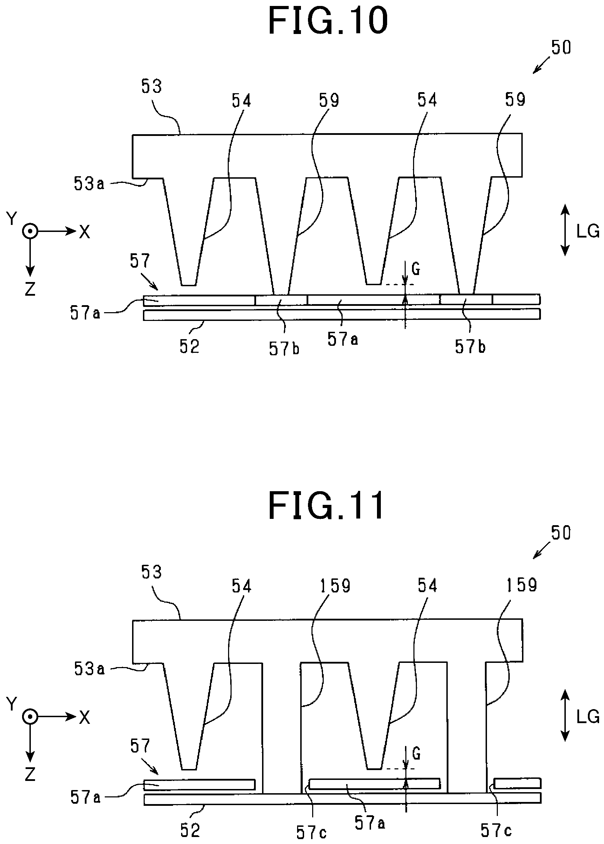

As shown in Fig. 10, it is possible to apply the configuration that the spacer 58 is omitted. In other words, the soft pad 53 can also be supported by supports 59 so that a predetermined-size gap G is formed between the detection member 57a and the multiple protrusions 54 without spacer. The support 59 protrudes from the inner surface 53a of the soft pad 53 toward the detection member 57a along the protrusion lengthwise direction LG, and is formed longer than the plurality of detection protrusions 54 by an amount equivalent to the thickness of the spacer 58 described above. The support 59 need only be in contact with the non-detection member 57b at the tip, and its cross-sectional and general shape is arbitrary. By forming the support 59 tapered as shown in Fig. 10, the situation where the tip of the support 59 comes off the non-detection member 5b and contacts the detection member 57a can be prevented as much as possible.

As shown in Fig. 11, a through hole 57c may be formed in the sensor sheet 57. In that case, the soft pad 53 can also be supported by a support 159 inserted through each through-hole 57c so that a predetermined-size gap G is formed between the detection member 57a and the plurality of protrusions 54. Each support 159 protrudes from the inner surface 53a of the soft pad 53 along the protrusion lengthwise direction LG and toward the frame 52, and is formed longer than the plurality of detection protrusions 54 by an amount equivalent to the thickness of the spacer 58 and detection member 57a. The support 159 need only have its tip in contact with the frame 52, and its cross-sectional and overview shape is arbitrary.

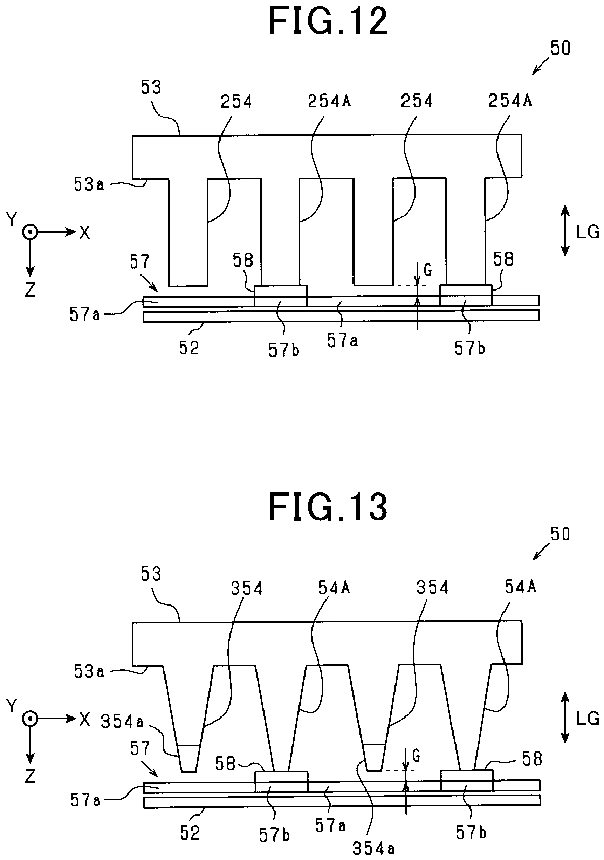

As shown in Fig. 12, a plurality of protrusions 254 of round or polygonal cross-sectional shape, extending straight with a constant thickness, can also protrude from the inner surface 53a of the soft pad 53 along the protrusion lengthwise direction LG toward the detection member 57a. In other words, the plurality of protrusions 254, 254A do not adopt a shape that gradually tapers or tapers only at the tip, as described above. Such a dimensional protrusion structure also results in a smaller total pressure area at the tips of the plurality of protrusions 254 than the pressure area involving the root portions of the plurality of protrusions 254 and their surroundings at the soft pad 53. Thus, when an object contacts the soft pad 53, a higher pressure than that applied to the soft pad 53 from the object can be applied to the detection member 57a from the tip of the protrusion 254. The plurality of protrusions 254A, which form part of the plurality of protrusions 254, function as part of the member comprising the support of the soft pad 53. By forming the protrusion 254 with a harder material (different materials) than the soft pad 53 and protrusion 254A, even higher pressure can be applied from the tip of the protrusion 254 to the detection member 57a.

As shown in Fig. 13, in each of the plurality of protrusions 354, the root side portions in the protrusion lengthwise direction LG, other than each tip 354a, may be formed of the same material as the soft pad 53. In such a case, the tip 354a can be made of a harder material than the soft pad 53. For example, the outline of the plurality of protrusions 354 is identical to the outline of the plurality of protrusions 54 described above. According to such a configuration, when an object contacts the soft pad 53, an even higher pressure can be applied from the tip 354a of the protrusion 54 to the detection member 57a.

The same configuration as the sensor unit 50 can be applied to a sensor unit 100 (see Fig. 1) for the straight section applied to the first upper arm portion 25.

The robot 10 may have a horizontally articulated robot body.

Each of the embodiments and modifications thereof may be implemented in combination to the extent possible.

### [Partial Reference Signs List]

10...robot
12...senso unit group (group of sensor units)
22...arm
50...sensor unit
52...frame
53...soft pad (soft member)
53a...inner surface
54...protrusion
54A...protrusion
56...protrusion
57...sensor sheet
57a...detection member
57b...non-detection member
58...spacer
59...support
100...sensor unit
154...protrusion
159...support
254...support
254A...support
354...support
G...gap with a predetermined size

## Claims

1. A sensor unit attached to an arm of an industrial robot and configured to detect contact with an object, comprising:
a soft member having an inner surface, the soft member being made of a material which is lower in hardness than a surface of the arm and formed in a shape that covers a surface of a predetermined portion of the arm;
a sensor sheet, which is formed into a sheet, having a detection member arranged to be opposed to the inner surface of the soft member to detect pressure applied thereto, and detecting contact when the pressure detected by the detection member exceeds a threshold value;
a plurality of protrusions protruding from the inner surface of the soft member towards the detection member; and
a support supporting the soft member such that a predetermined-size gap is formed between the detection member and the plurality of protrusions.

2. The sensor unit according to claim 1, wherein the plurality of protrusions are thinner as the protrusions approach from the inner surface of the soft member to the detection member.

3. The sensor unit according to claim 2, wherein
the detection member is provided as a plurality of detection members arranged two-dimensionally and discreetly in the sensor such there are remaining portions other than the detection members in the sensor sheet, and
the plurality of protrusions include a plurality of protrusions which are opposed, protrusion by protrusion, to the remaining portions with a spacer whose thickness is set to correspond to a predetermined-size gap in a direction parallel to a height of each of the protrusions.

4. The sensor unit according to claim 3, wherein
the soft member and the plurality of protrusions are made of the same material and formed into a unified member.

5. A sensor unit attached to an arm of an industrial robot and configured to detect contact with an object, comprising:
a soft member having an inner surface, the soft member being made of a material which is lower in hardness than a surface of the arm and formed in a shape that covers a surface of a predetermined portion of the arm;
a sensor sheet, which is formed into a sheet, having a detection member arranged to be opposed to the inner surface of the soft member to detect pressure applied thereto, and detecting contact when the pressure detected by the detection member exceeds a threshold value;
a force concentrator adapted to concentrate a force applied to the soft member and transmit the concentrated force in a direction toward the detection member; and
a support adapted to support the soft member such that there is left a predetermined-size gap between the detection member and the force concentrator.

6. An industrial robot, comprising:
an arm;
the sensor unit according to any one of claims 1 to 5, which is applied to the arm, and
means for reducing a motion speed of the arm when the sensor unit detects the contact.
